# EUROPÄISCHE PATENTSCHRIFT

(11) **EP 1 109 398 B1**
(45) Veröffentlichungstag und Bekanntmachung des Hinweises auf die Patenterteilung: **14.06.2006**
(21) Anmeldenummer: 00127213.7
(22) Anmeldetag: 14.12.2000
(51) Int. Cl.: H04N 1/40, H04N 1/407

(54) **Bilderfassungssystem zur Erzeugung eines Dunkel- und Hellbildes**
Image reading system to obtain a dark image and light image
Système de lecture d'image pour obtenir une image sombre et une image claire

(30) Priorität: 17.12.1999 DE 19960888
(43) Veröffentlichungstag der Anmeldung: 20.06.2001
(73) Patentinhaber: ROBOT Visual Systems GmbH, 40789 Monheim (DE)
(72) Erfinder: Schmitz, Thomas Dr., 30853 Langenhagen (DE); Guse, Wolfgang, Dr., 31141 Hildesheim (DE)
(74) Vertreter: Weisse, Renate

(56) Entgegenhaltungen:
- CA-A- 2 230 434
- DE-A- 4 331 965
- US-A- 5 237 431
- US-A- 5 317 427
- R. C. GONZALES, P. WINTZ: "Digital Image Processing" 1987 , ADDISON WESLEY , READING, USA XP002187343 * Seite 139 - Seite 160 * * Seite 173 - Seite 175 *

## Beschreibung

### Technisches Gebiet

Die Erfindung betrifft eine Vorrichtung zum Erzeugen und Verarbeiten eines Bildes einer Objektszene mittels eines Bildaufnehmers (10), der mit vollem Dynamikumfang von den verschiedenen Pixeln des Bildes digitale Helligkeitswerte liefert, wobei die Objektszene einerseits relativ dunkle Bereiche und andererseits relativ helle Bereiche enthält, mit digitalen Speichermitteln zum Speichern dieser digitalen Helligkeitswerte und Bildverarbeitungsmitteln zum Verarbeiten der gespeicherten, digitalen Helligkeitswert.

Weiterhin betrifft die Erfindung eine Verkehrsüberwachungsanlage bei der ein digitales Bild eines Fahrzeugs erzeugbar ist, mit einer Vorrichtung nachder Erfindung.

### Stand der Technik

Es ist bekannt, Bilder mit einer digitalen Kamera aufzunehmen, zu verarbeiten und in einem Datenspeicher zu speichern. Die digitalen Kameras verfügen in der Regel über CCD-Bildaufnehmer. CCD-Bildaufnehmer (charge-couple-device) sind hinreichend aus der Literatur bekannt und beispielsweise in Laserspektroskopie, Wolfgang Demtröder, 3. Auflage, Springer-Verlag Berlin Heidelberg New York oder in Bergmann Schaefer Lehrbuch der Experimentalphysik, Festkörper Band 6, de Gruiter Verlag, beschrieben.

Diese CCD-Bildaufnehmer bestehen aus zahlreichen als Matrix aufgebauten CCD-Elementen. Jedes CCD-Element bzw. jeder CCD-Sensor liefert für einen Bildpunkt verschiedene Farb- bzw. Grauwert-Informationen. Diese werden als digitale Zahlen ausgelesen. Gute CCD-Sensoren verfügen über eine Dynamik von 10 Bit oder mehr. Damit lassen sich grundsätzlich wenigstens 2¹⁰ Farb- bzw. Grauwerte darstellen. Derzeitige Bildwiedergabesysteme arbeiten üblicherweise nur mit 8 Bit Graustufen. Die damit darstellbaren 256 Graustufen reichen daher nicht aus, um die gesamte Dynamik der CCD-Sensoren vollständig auszuschöpfen.

Solche Bilderfassungs- und -verarbeitungssysteme werden üblicherweise bei Verkehrsüberwachungseinrichtungen mit Digitalkamera verwendet. Die Verkehrsüberwachungseinrichtungen dienen dazu, Verkehrsübertretungen, wie beispielsweise Geschwindigkeitsüberschreitung oder Durchfahren einer roten Ampel, durch einen Verkehrsteilnehmer zu erfassen. Ein optimales Bild ist bei solchen Einrichtungen für die Strafverfolgung dann erreicht, wenn sowohl der Fahrer in der relativ dunklen Fahrgastzelle als auch das helle Nummernschild gut erkennbar sind. Dies ist bei derzeit verwendeten Bilderfassungssystemen nicht möglich. Entweder sind die Hellanteile der Bilder zu hell oder die Dunkelanteile der Bilder zu dunkel. So läßt sich beispielsweise bei einer Aufnahme eines Fahrzeugs je nach dem der Fahrer in der dunklen Fahrgastzelle oder das helle Nummernschild nicht deutlich erkennen. Dies führt insbesondere bei der nachträglichen digitalen Bildverarbeitung häufig zu großen Problemen. Die Bilder müssen bezüglich des Fahrers und des Nummernschildes nämlich eindeutig identifizierbar sein, um als Beweismittel dienen zu können.

Die kanadische Patentanmeldung CA 2,230,434 offenbart ein Verfahren und eine Vorrichtung zur Aufnahme von digitalen Bildern insbesondere für Verkehrsüberwachungsanlagen. Um das helle Nummernschild eines aufgenommene Fahrzeugs gut erkennbar darzustellen, wird das Bildsignal mit der vollen Dynamik des Bildaufnehmers auf ein Bildsignal von geringerer Dynamik so abgebildet, dass zur Darstellung des Helligkeitsbereich des Nummernschildes eine relativ größere Anzahl an Helligkeitswerten verwendet wird. Das Dokument beschäftigt sich nicht mit der gleichzeitigen guten Auflösung dunkler Bildbereiche wie etwa der Fahrgastzelle des aufgenommenen Fahrzeugs.

Durch die DE 43 31 965 A ist ein Verfahren zur Erhöhung der Graustufenauflösung bei der Wiedergabe einer mit einem CCD-Sensor abgetasteten Bildvorlage bekannt. Die Bildvorlage wird dabei zweimal abgetastet, und zwar werden hellere Partien der Bildvorlage mit Licht abgetastet, das in den Sensorelementen eine im Verhältnis geringere Ladungsintegration bewirkt, während dunklere Partien der Bildvorlage mit Licht abgetastet werden, das eine im Verhältnis höhere Ladungsintegration bewirkt. Dieses Verfahren ist beschränkt auf die Abtastung einer Bildvortage od. dgl. Es ist nicht anwendbar bei der Aufnahme von bewegten Objektszenen, z.B. bei Verkehrsüberwachungs-Anlagen.

Ein Buch von Gonzales und Winz "Digital Image Processing" 1987, Addison Wesley, Reading USA XP 002187343, Seiten 139 bis 175 beschreibt Verfahren zur Bildverstärkung. Dabei wird die Bilddichte Pixel für Pixel in Abhängigkeit von benachbarten Pixeln korrigiert, um Details herauszuarbeiten oder Kontraste zu verbessern. Das erfordert aufwendige Rechenvorgänge.

Die US 5,317,427 A beschreibt ein Gerät zur Bildverarbeitung von Daten mit einem großen Dynamikbereich. Durch ein Digitalfilter werden die Bilddaten in Hellbilddaten und Dunkelbilddaten getrennt. Hell- und Dunkelbilddaten werden getrennt zur optimalen Anpassung an den Datenbereich komprimiert. Die erhaltenen komprimierten Bilddaten werden dann so wieder zusammengesetzt, daß der Helligkeitswert des dunkelsten Punktes des Dunkelbildes mit dem Helligkeitswert des weißesten Punktes des Hellbildes zusammenfällt. Es entsteht dann ein einheitliches Bild mit geringerem Dynamikbereich, bei welchem aber durch unterschiedliche, jeweils optimierte Kompression der Daten des Hell- und des Dunkelbildes in beiden Bereichen Details besser erkennbar sind.

Die US 5,237,434 beschreibt einen Farbkopierer, bei welchem ein zu kopierendes Original mittels eines Sensors abgetastet wird. Das Reflexionsvermögen des Originals in jedem Bildpunkt wird durch einen A/D-Wandler in einen Digitalwert umgesetzt. Diese Digitalwerte werden durch einen Logarithmierer in Farbdichtewerte umgesetzt. Dieser Logarithmierer bildet eine "Tabelle" mit drei Bereichendes Reflexionsvermögens und sägezahnartiger Charakteristik, wobei die Ordinate 8 Bit, also 256 Stufen bildet. Die digitalen Ausgangswerte des Logarithmierers werden durch Bitverschiebung in den Bereichen geringeren Reflexionsvermögens jeweils mit 2 bzw. 4 multipliziert

### Offenbarung der Erfindung

Aufgabe der Erfindung ist es daher, eine Vorrichtung und ein Verfahren für Bildwiedergabesysteme zu schaffen, bei dem die von den CCD-Sensoren erfaßten Informationen im vollen Umfang ausgeschöpft werden.

Erfindungsgemäß wird die Aufgabe dadurch gelöst, daß bei einer Vorrichtung der eingangs genannten Art in den Speichermitteln getrennt einmal Stellen geringer Wertigkeit der digitalen Helligkeitswerte zur Erzeugung eines Dunkelbildes mit geringerem Dynamikumfang und zum anderen Stellen höherer Wertigkeit der digitalen Helligkeitswerte zur Erzeugung eines Hellbildes mit geringerem Dynamikumfang speicherbar sind, wobei in dem Dunkelbild die Hellanteile des Bildes am präzisesten wiedergegeben werden und in dem Hellbild die Dunkelanteile am besten zu erkennen sind.

Die Erfindung beruht auf der Erkenntnis, daß bei herkömmlichen digitalen Bilderfassungssystemen mit CCD-Sensoren, wie sie in Digitalkameras von Verkehrsüberwachungseinrichtungen Anwendung finden, die Dynamik der CCD-Sensoren nicht in vollen Umfang ausgenutzt wird. Die Erfindung folgt daher dem Prinzip, aus den Stellen geringerer Wertigkeit der digitalen Helligkeitswerte der Bilddaten ein Dunkel- und aus den Stellen höherer Wertigkeit der digitalen Helligkeitswerte der Bilddaten ein Hellbild mit geringerem Dynamikumfang zu erzeugen, wobei die gesamte Dynamik des CCD-Sensors verwendet wird. Durch die Erstellung von wenigstens zwei Bildern mit unterschiedlichen Helligkeitsanteilen wird erreicht, daß auf dem einen Bild ― dem sogenannten Dunkelbild ― das Nummernschild und auf dem anderen ― dem sogenannten Hellbild ― der Fahrer besser erkennbar wird. Dies erfolgt durch unterschiedliches Auslesen der CCD-Sensoren.

Das Dunkelbild wird vorteilshafteweise erzeugt, indem die ersten acht Bit des CCD-Sensors ausgelesen werden. In diesen ersten acht Bits sind mehr verwertbare Informationen über den Helllanteil enthalten. Auf diesem Dunkelbild läßt sich einfacher - gegenüber der Fahrgastzelle - das sehr hell strahlende Nummernschild identifizieren. Bei dem Dunkelbild erscheint der Fahrer jedoch bestenfalls nur als dunkler Schatten. Daher wird mit den letzten acht Bit des CCD-Sensors das Hellbild erzeugt. In den letzten acht Bit sind mehr verwertbare Informationen über den Dunkelanteil des Bildes enthalten. Der Fahrer läßt sich somit problemlos feststellen. Das weiße Nummernschild ist in diesem Bild nur als helle Fläche zu sehen. Damit wird die Dynamik eines 10 Bit CCD-Sensors voll ausgeschöpft.

Vorteilhafterweise werden die beiden digitalen Bilder miteinander kombiniert. Es ist dazu erforderlich, daß Mittel zum Mischen des Bildes mit den Hellanteilen mit dem Bild mit den Dunkelanteilen vorgesehen sind. Es wird ein einziges Bild erzeugt, das vielleicht ein wenig künstlich aussieht, bei dem jedoch das Nummernschild und der Fahrer gut erkennbar sind.

Eine weitere vorteilhafte Ausgestaltung der Erfindung ergibt sich, wenn Bildabgleichmittel vorgesehen sind, um die Bilder mit vorbekannten Informationen, z.B. Verhalten bei Tag- oder Nachtaufnahmen, bezüglich des Bildes anzugleichen. Die Bildabgleichmittel können ein digitales Histogramm aufweisen, in dem die relevanten Informationen abgespeichert sind. Das digitale Histogramm besteht aus Daten, die für eine erfolgreiche Bildauswertung erforderlich sind und werden dem Bildverarbeitungssystem vor der Bildverarbeitung zugeführt. Mit Hilfe dieses digitalen Histogramm kann an den zu verarbeitenden digitalen Bildern ein Abgleich erfolgen.

Der Farb- bzw. Grauwertabgleich geschieht vorteilhafterweise über ein Farb- bzw. ein Grauwerthistogramm. Die von den CCD-Sensoren gelieferten Farb- bzw. Grauwerte werden mit den Farb- bzw. Grauwerten des digitalen Farb- bzw. Grauwerthistogramms verglichen und entsprechend optimiert.

Ein noch höherer Optimierungsgrad wird erreicht, indem die Helligkeits- bzw. Kontrastwerte der Bilder beim erfindungsgemäßen Verfahren aufgrund von vorhandener Information berücksichtigt werden.

Weitere Vorteile ergeben sich aus dem Gegegenstand der Unteransprüche.

### Kurze Beschreibung der Zeichnung

- Fig. 1: zeigt eine Prinzipskizze als Blockdiagramm einer erfindungsgemäßen Vorrichtung.
- Fig. 2: zeigt eine Prinzipskizze als Blockdiagramm eines erfindungsgemäßen Verfahrens.

### Bevorzugtes Ausführungsbeispiel

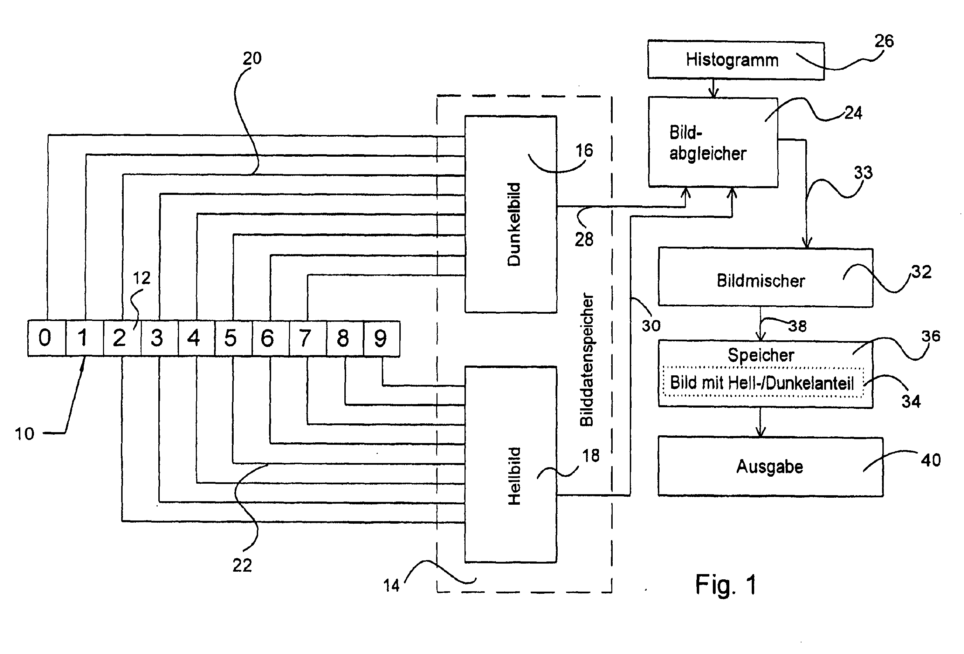

Fig. 1 ist eine Prinzipskizze als Blockdiagramm einer erfindungsgemäßen Vorrichtung. Eine solche Vorrichtung wird vorzugsweise in einer Verkehrsüberwachungseinrichtung zum Überwachen des Verkehrs eingesetzt. Mit 10 wird in dieser Darstellung von Fig.1 ein CCD-Sensor bezeichnet. Der CCD-Sensor 10 ist ein Bildaufnehmer, wie er auch bei Digitalkameras zum Einsatz kommt. Der CCD-Sensor 10 verfügt vorliegend über eine Dynamik von 10 Bit. Dies wird durch die Felder 12 angedeutet. Es können aber auch CCD-Sensoren mit größerer Dynamik zum Einsatz kommen und soll durch dieses Ausführungsbeispiel nicht beschränkt werden.

Das unterste Bit des CCD-Sensors - das Feld 12 mit der Null - repräsentiert den dunkelsten Bildanteil. Das höchste Bit - das Feld 12 mit der Zahl 9 - repräsentiert den hellsten Bildanteil. Die dazwischen liegenden Bits des CCD-Sensors steigern sich entsprechend in ihrem Helligkeitsanteil aufwärts.

In einem Bilddatenspeicher 14 - als gestrichelte Linie dargestellt - werden die aus dem CCD-Sensor 10 ausgelesenen Bilddaten einmal als sogenanntes Dunkelbild 16 und einmal als sogenanntes Hellbild 18 abgelegt. Das Dunkelbild 16 wird dadurch erzeugt, daß die ersten acht Bit des CCD-Sensors 10 ausgelesen werden. Dementsprechend werden die Hellanteile in diesem Dunkelbild am präzisesten wiedergegeben und nicht überstrahlt. Das Hellbild 18 wird durch Auslesen über die letzten acht Bit des CCD-Sensors 10 gebildet. In diesem Bild sind die Dunkelanteile am besten zu erkennen, da sie durch die "Überbelichtung" am optimalsten ausgeleuchtet sind. Das Auslesen der ersten acht Bit bezeichnen Linien 20; das Auslesen der letzten acht Bit entsprechend Linien 22.

Der Ablauf der digitalen Bilddatenverarbeitung wird durch einen in dieser Abbildung nicht gezeigten programmierten Prozessor gesteuert. Die Verbindungslinien der einzelnen Blöcke sind elektrische Verbindungen oder entsprechende elektrische Schaltungen bzw. Programmbestandteile, um die Vorgänge zu realisieren.

Sowohl das Dunkelbild 16 als auch das Hellbild 18 werden mit einem Bildabgleicher 24 jeweils mit einem Histogramm 26 zur Optimierung abgeglichen. In dem Histogramm sind Informationen als Daten abgelegt, die von vorher angefertigten Aufnahmen herstammen und entsprechend optimiert wurden. Diese Informationen fließen in die neu erstellten und zu verarbeitenden digitalen Bilder ein. Die Informationen können beispielsweise als Daten bezüglich der Licht-, Farb- und Grauverhältnisse, Kontraste, usw. vorliegen.

Der Bildabgleich dient dazu, nur die Daten der Bilder selektiv zu optimieren, die für die spätere Auswertung relevant sind. Dies ist beispielsweise bei einer Verkehrsüberwachungseinrichtung das Nummernschild und der Fahrgastraum. Die übrigen Bilddaten sind eher unwichtig.

Das Zuführen der Bilddaten 16, 18 zu dem Bildabgleicher 24 wird durch die Pfeile 28, 30 angedeutet. Von dem Bildabgleicher 24 werden die Bilddaten 16, 18 wiederum einem Bildmischer 32 zugeführt (Pfeil 33). Der Bildmischer 32 setzt aus dem optimierten Hellbild 18 und dem optimierten Dunkelbild 16 ein einzelnes Bild 34 zusammen, welches in einem Speicher 36 abgespeichert (Pfeil 38) wird. Das zusammengesetzte Bild 34 ist als gepunkteter Block in dem Speicher 36 dargestellt.

Das Mischen der Bilder 16, 18 erfolgt dadurch, daß die relevanten Bildanteile des Dunkelbildes, beispielsweise das helle Nummernschild und die Scheinwerfer, in das Hellbild an dieselbe Position gesetzt werden. Dadurch ist sowohl die Fahrgastzelle mit dem Fahrer als auch das Nummernschild auf einem Bild präzise erkennbar.

Von dem Speicher 36 kann das zusammengesetzte Hell-/Dunkelbild 34 zur Weiterverarbeitung oder auf einen Bildschirm ausgegeben werden. Dieses wird durch Block 40 dargestellt. Pfeil 42 deutet die Datenübergabe an ein Ausgabegerät 40 an.

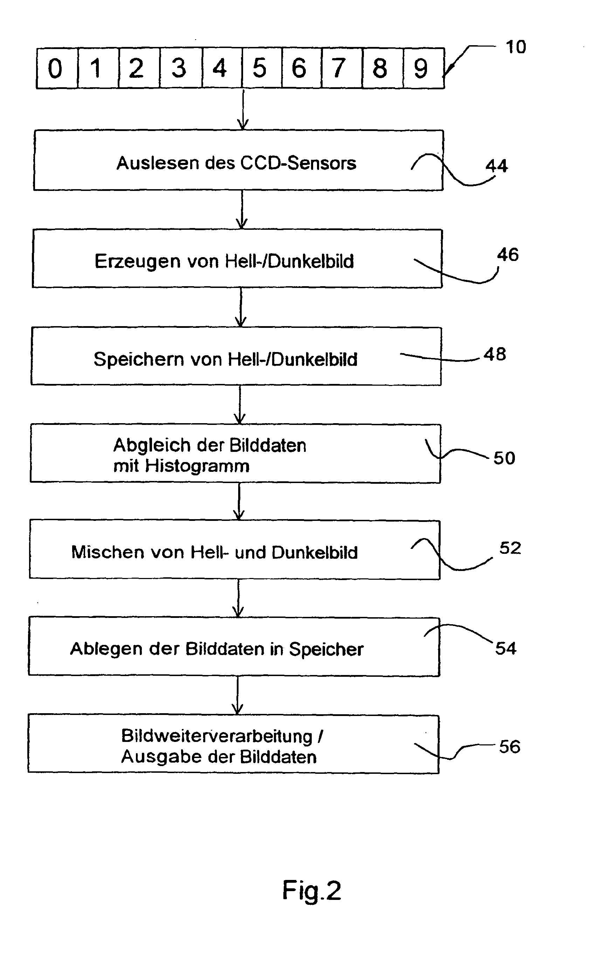

In Fig. 2 werden die entsprechenden Verfahrensschritte in Form eines Blockdiagramms dargestellt, nach dem das Verfahren prinzipiell vorgeht. Aus dem CCD-Sensor 10 werden die Bilddaten ausgelesen. Der Auslesevorgang wird als Block 44 dargestellt. Beim Auslesen wird ein Hell- und ein Dunkelbild erzeugt, symbolisiert durch Block 46. Anschließend wird sowohl das Hell- als auch das Dunkelbild in einem Speicher abgespeichert - Block 48. Das Abgleichen der so erzeugten Bilder mit einem Histogramm wird mit Block 50 bezeichnet. Mischen des Hellbildes mit dem Dunkelbild wird bildlich durch Block 52 gezeigt. Dieses Bild wird schließlich in einem Speicher abgelegt - Block 54 des Diagramms. Von dort können die Bilddaten von einem weiteren Gerät zur Weiterverarbeitung, beispielsweise Kompression oder Auswertung mittels Texterkennung, abgeholt bzw. auf ein Ausgabegeräte, wie Bildschirm oder Drucker, ausgegeben werden. Die Bildweiterverarbeitung bzw. Ausgabe wird durch Block 56 dargestellt.

## Patentansprüche

1. Vorrichtung zum Erzeugen und Verarbeiten eines Bildes einer Objektszene mittels eines Bildaufnehmers (10)der mit vollem Dynamikumfang von den verschiedenen Pixeln des Bildes digitale Helligkeitswerte liefert, wobei Objektsnne einerseits relativ dunkle Bereiche und andererseits relativ helle Bereiche enthält, mit digitalen Speichermitteln zum Speichern dieser digitalen Helligkeitswerte und Bildverarbeitungsmitteln zum Verarbeiten der gespeicherten, digitalen Helligkeitswerte, **dadurch gekennzeichnet, daß** in den Speichermitteln (14) getrennt einmal Stellen geringer Wertigkeit der digitalen Helligkeitswerte zur Erzeugung eines Dunkelbildes (16) mit geringerem Dynamikumfang und zum anderen Stellen höherer Wertigkeit der digitalen Helligkeitswerte zur Erzeugung eines Hellbildes mit geringerem Dynarnikunafang speicherbar sind, wobei in dem Dunkelbild die Hellanteile des Bildes am präzisesten wiedergegeben werden und in dem Hellbild die Dunkelanteile am besten zu erkennen sind.

2. Vorrichtung nach Anspruch 1 **dadurch gekennzeichnet, daß** Mittel (32) zum Mischen des Dunkelbildes (16) mit dem Hellbild (18) zur Erzeugung eines zusammengesetzten Bildes vorgesehen sind, in welcher Bildbereiche, welche dunkle Bereiche der Objektszene darstellen, aus dem Hellbild und Bildbereiche, welche helle Bereiche der Objektszene darstellen, aus dem Dunkelbild entnommen sind.

3. Vorrichtung nach Anspruch 2, **dadurch gekennzeichnet, daß** durch die Mittel zum Mischen der Bilder Bildanteile des Dunkelbildes an die entsprechende Position des Hellbildes gesetzt werden.

4. Vorrichtung nach einem der Ansprüche 1 oder 2, **dadurch gekennzeichnet, daß** die Bildverarbeitungseinriehtung (24, 32, 34, 40) Bildabgleichmittel (24) zum Optimieren der Bilddaten der digitalen Bilder anhand eines Histogramms (26) aufweist, das aus bekannten Tag- bzw. Nachtaufnahmen gewonnen wurde.

5. Verkebrsüberwachungsanlage bei der ein digitales Bild eines Fahrzeugs erzeugbar ist, mit einer Vorrichtung nach Anspruch 3, **dadurch gekennzeichnet, daß,** ein erster Bereich, in dem in dem Bild des Fahrzeugs das Nummernschild erscheint, aus dem Dunkelbild entnommen ist.

6. Verkehrsüberwachungsanlage nach Anspruch 5, **dadurch gekennzeichnet, daß** durch den Bildaufnehmer (10) das Fahrzeug von vom entgegen der Fahrtrichtung aufhehmbar ist und in dem zusammengesetzten Bild ein die Windschutzscheibe mit dem Fahrgastraum zeigender zweiter Bereich aus dem Hellbild entnommen ist.

## Claims

1. A device for generating and processing digital pictures of an object scene by means of an image detector means (10) providing digital brightness values with the full dynamic range of the various pixels of the picture, the object scene comprising relatively dark areas on one hand, and relatively bright areas on the other hand, with digital memory means for storing said digital brightness values and picture processing means for processing the stored, digital brightness values, **characterised in that** the memory means (14) are adapted to separately store positions of low significance with digital brightness values for the generation of a dark picture (16) of digital brightness values with small dynamic range and on the other hand for the generation of a bright picture of digital brightness values with small dynamic range, wherein the bright portions of the dark picture of the picture are represented most precisely and the dark portions in the bright picture are recognisable best in the bright picture.

2. A device according to claim 1, **characterised in that** means (32) are provided for mixing the dark picture (16) with the bright picture (18) for the generation of an assembled picture wherein picture areas representing dark areas of the object scene are taken from the bright picture and picture areas representing bright areas of the object scene are taken from the dark picture.

3. A device according to claim 2, **characterised in that** picture portions of the dark picture are put into the corresponding position of the bright picture by the means for mixing the pictures.

4. A device according to claim 1 or 2, **characterised in that** the picture processing means (24, 32, 34, 40) has picture comparing means (24) for optimising the picture data using a histogram (26) taken from known day- or night pictures.

5. Traffic control system adapted to generate a digital picture of a vehicle with a device according to claim 3, **characterised in that** a first area, wherein the registration plate appears in the image of the vehicle is taken from the dark picture.

6. Traffic control system according to claim 5, **characterised in that** the vehicle is detectable by the image detector means (10) from the front side in a direction opposite to the driving direction and a second area showing the front window with the passenger compartment in the composed picture is taken from the bright picture.

## Revendications

1. Dispositif destiné à générer et traiter une image d'une scène d'objets à l'aide d'un capteur d'images (10) qui livre des valeurs numériques de luminosité avec une étendue dynamique complète des différents pixels de l'image, la scène d'objets comprenant d'une part des zones relativement foncées et d'autre part des zones relativement claires, à l'aide de moyens numériques de mémorisation destinés à mémoriser ces valeurs numériques de luminosité et de moyens de traitement d'images destinés à traiter les valeurs numériques de luminosité mémorisées, **caractérisé en ce que,** d'une part, des zones aux valeurs numériques de luminosité de valeur moindre qui sont destinées à générer une image foncée (16) d'étendue dynamique moindre et, d'autre part, des zones aux valeurs numériques de luminosité de valeur supérieure qui sont destinées à générer une image claire (18) d'étendue dynamique moindre peuvent être mémorisées dans les moyens de mémorisation (14), les parties claires de l'image étant restituées le plus précisément possible dans l'image foncée et les parties foncées étant visibles au mieux dans l'image claire.

2. Dispositif selon la revendication 1, **caractérisé en ce qu'**il est prévu des moyens (32) destinés à mélanger l'image foncée (16) avec l'image claire (18) afin de générer une image composée dans laquelle des zones d'image représentant des zones foncées de la scène d'objets sont obtenues à partir de l'image claire et des zones d'image représentant des zones claires de la scène d'objets sont obtenues à partir de l'image foncée.

3. Dispositif selon la revendication 2, **caractérisé en ce que** des parties de l'image foncée sont placées sur la position correspondante de l'image claire à l'aide des moyens destinés à mélanger les images.

4. Dispositif selon l'une quelconque des revendications 1 ou 2, **caractérisé en ce que** le dispositif de traitement d'image (24, 32, 34, 40) présente des moyens de correction d'images (24) destinés à optimiser les données des images numériques à l'aide d'un histogramme (26) obtenu à partir de prises de vue de jour ou de nuit connues.

5. Dispositif de contrôle de la circulation pour lequel une image numérique d'un véhicule peut être générée à l'aide d'un dispositif selon la revendication 3, **caractérisé en ce qu'**une première zone à l'intérieur de laquelle la plaque minéralogique apparaît dans l'image du véhicule est extraite de l'image foncée.

6. Dispositif de contrôle de la circulation selon la revendication 5, **caractérisé en ce que** le véhicule peut être photographié de devant dans le sens inverse au sens de la circulation grâce au capteur d'images (10) et, dans l'image composée, une deuxième zone montrant le pare-brise avant et l'habitacle du véhicule est extraite de l'image claire.
